(19) Europäisches Patentamt
European Patent Office
Office européen des brevets

(11) **EP 4 786 311 A1**

(12) **EUROPEAN PATENT APPLICATION**
published in accordance with Art. 153(4) EPC

(43) Date of publication:
**05.08.2026 Bulletin 2026/32**

(21) Application number: **23954089.1**

(22) Date of filing: **28.09.2023**

(51) International Patent Classification (IPC):
***B62D 6/00*** (2006.01)

(52) Cooperative Patent Classification (CPC):
**B62D 6/00**

(86) International application number:
**PCT/IB2023/000565**

(87) International publication number:
**WO 2025/068730 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nissan Motor Co., Ltd.
Yokohama-shi, Kanagawa 221-0023 (JP)**

• **Renault s.a.s
92100 Boulogne Billancourt (FR)**

(72) Inventor: **TSUDA, Fumiya
Atsugi-shi, Kanagawa 243--0123 (JP)**

(74) Representative: **Grünecker Patent- und
Rechtsanwälte
PartG mbB
Leopoldstraße 4
80802 München (DE)**

(54) **VEHICULAR BRAKING/DRIVING FORCE CONTROL METHOD AND CONTROL DEVICE**

(57) To control braking/driving force of a front wheel and/or a rear wheel of a vehicle, a vehicular braking/driving force control method: determines whether the vehicle is in a non-grip area where the cornering force of a tire is not proportional to operation input by a driver; and in the non-grip area, causes an individual yaw rate control device to perform control to bring a yaw rate generated in the vehicle close to a target yaw rate, calculates a target vehicle body slip angle of the vehicle, and controls braking/driving force of the front wheel and/or the rear wheel to bring a vehicle body slip angle generated in the vehicle close to the target vehicle body slip angle.

FIG. 3

EP 4 786 311 A1

**Description**

Technical Field

The present invention relates to a vehicular braking/driving force control method and a vehicular braking/driving force control device.

Background Art

PTL 1 described below describes that a direction of a yaw rate generated in a vehicle and a direction of a vehicle body slip angle of the vehicle (vehicle body) are compared with each other, and when both directions are the same (oversteer), driving force of front wheels is made large and when both directions are opposite to each other (understeer), driving force of rear wheels is made large. In addition, improving steering stability at the time of turning by detecting a yaw rate and lateral acceleration acting on the vehicle and performing driving force allocation to front and rear wheels in consideration of a turning state (an oversteer state or an understeer state) of the vehicle obtainable from the magnitude of an estimated vehicle body slip angle is generally performed.

Citation List

Patent Literature

PTL 1: JP 2007-302115 A

Summary of Invention

Technical Problem

By the way, a driver predicts a movement of the vehicle several seconds after the present time as a forward gaze position at the time of turning of the vehicle, and performs (corrective) steering in such a way that the forward gaze position coincides with a target turning trajectory. On the other hand, the turning state of the vehicle is brought into the oversteer state or the understeer state mainly in a non-grip area where cornering force of a tire is not proportional to operation input by the driver. When in such a non-grip area, the turning state of the vehicle, that is, a yaw rate generated in the vehicle, is controlled with braking/driving forces of the front and rear wheels, the driver sometimes needs to perform corrective steering to cause the forward gaze position to coincide with the target turning trajectory.

An object of the present invention is to provide a vehicular braking/driving force control method and a vehicular braking/driving force control device capable of achieving improvement in steering stability and reduction in corrective steering at the time of turning in a non-grip area at the same time.

Solution to Problem

One aspect of the present invention, in a vehicle provided with a yaw rate control device capable of controlling a yaw rate, determines whether the vehicle is in a non-grip area where the cornering force of a tire is not proportional to operation input by a driver, and in the non-grip area, causes the yaw rate control device to perform control to bring a yaw rate generated in the vehicle close to a target yaw rate, calculates a target vehicle body slip angle of the vehicle, and controls braking/driving force of the front wheel and/or the rear wheel to bring a vehicle body slip angle generated in the vehicle close to the target vehicle body slip angle.

Advantageous Effects of Invention

According to the one aspect of the present invention, since a yaw rate of the vehicle in the non-grip area comes close to a target yaw rate, steering stability at the time of turning is improved, and at the same time, by properly setting a target vehicle body slip angle of the vehicle in the non-grip area, corrective steering can be reduced.

The object and advantages of the invention will be realized and attained by means of the elements and combinations particularly pointed out in the claims. It is to be understood that both the foregoing general description and the following detailed description are exemplary and explanatory and are not restrictive of the invention.

Brief Description of Drawings

FIG. 1 is a plan view illustrative of a schematic configuration of an example of a vehicular braking/driving device of an embodiment;

FIG. 2 is a block diagram of a functional configuration example of a controller;

FIG. 3 is a flowchart illustrative of an example of calculation processing executed in a front/rear motor torque correction value calculation unit;

FIG. 4 is a flowchart of a subprogram executed in the calculation processing in FIG. 3;

FIG. 5 is a flowchart of another subprogram executed in the calculation processing in FIG. 3;

FIG. 6 is an explanatory diagram of a target vehicle body slip angle set in calculation processing in FIG. 5;

FIG. 7 is a flowchart of still another subprogram executed in the calculation processing in FIG. 3;

FIG. 8 is an explanatory diagram of a target vehicle body slip angle set in calculation processing in FIG. 7;

FIG. 9 is an explanatory diagram of another target vehicle body slip angle set in the calculation processing in FIG. 7;

FIG. 10 is an explanatory diagram of a proportional gain used for setting the target vehicle body slip angle;

FIG. 11 is an explanatory diagram of another proportional gain used for setting the target vehicle body slip angle; and

FIG. 12 is an explanatory diagram of still another proportional gain used for setting the target vehicle body slip angle.

Description of Embodiments

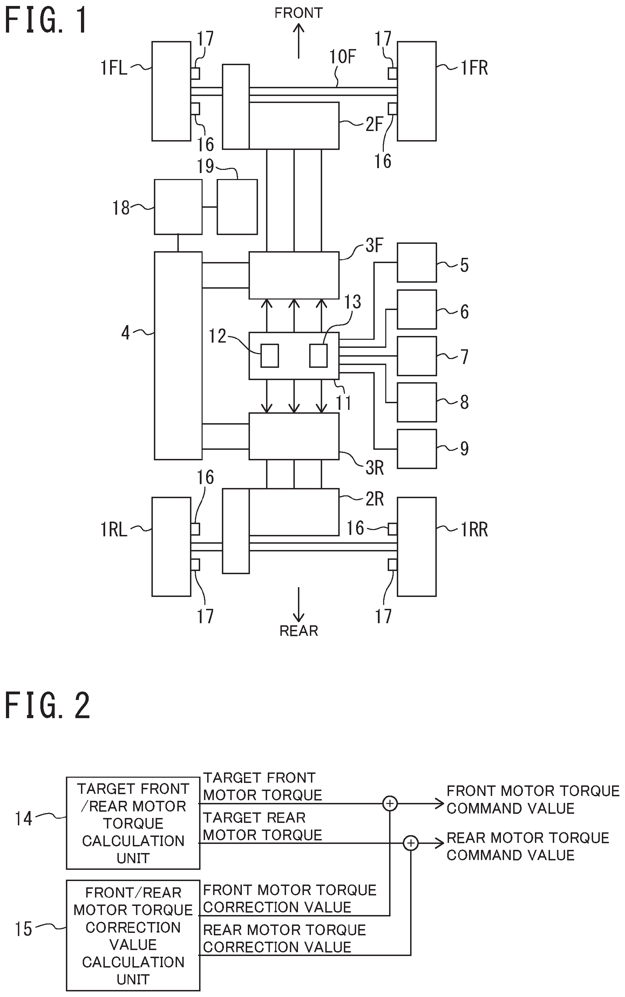

A braking/driving device of an embodiment illustrated in FIG. 1 includes a front motor 2F that drives front wheels 1FL and 1FR (front axle 10F) and a rear motor 2R that drives rear wheels 1RL and 1RR (rear axle 10R). Both the front motor 2F and the rear motor 2R are three-phase AC electric motors. Therefore, a vehicle in this embodiment is an electric four-wheel drive vehicle that drives each of the front wheels 1FL and 1FR and the rear wheels 1RL and 1RR with a separate electric motor. The vehicle is equipped with a driving battery 4 that supplies power to the front motor 2F and the rear motor 2R. The battery 4 is a DC storage battery that enables high-voltage high-current power to be generated. To convert DC power from the battery 4 to three-phase AC power and apply the AC power to the front motor 2F and the rear motor 2R, a front inverter 3F and a rear inverter 3R are provided for the front motor 2F and the rear motor 2R, respectively. The front inverter 3F and the rear inverter 3R also have a function of causing the front motor 2F and the rear motor 2R to perform regenerative operation to charge the battery 4, respectively. When the front motor 2F and the rear motor 2R perform regenerative operation, braking forces (braking torque) are provided to the front wheels 1FL and 1FR and the rear wheels 2RL and 2RR, respectively. The front inverter 3F and the rear inverter 3R are capable of adjusting operating states of the front motor 2F and the rear motor 2R, such as driving torque and braking torque, by adjusting power applied to or regenerative power from the front motor 2F and the rear motor 2R, respectively. The driving torque or the braking torque of the front motor 2F and the rear motor 2R adjusted by the front inverter 3F and the rear inverter 3R, respectively can be controlled in accordance with a command signal from a controller 11. That is, the front motor 2F and the rear motor 2R are capable of adjusting driving force or braking force of the front wheels 1FL and 1FR and the rear wheels 1RL and 1RR according to the operating states, respectively. Note that driving force and braking force are collectively referred to as braking/driving force. In addition, the front wheels 1FL and 1FR and the rear wheels 2RL and 2RR are provided with hydraulic braking devices 17 that are capable of individually braking the wheels, as with a conventional vehicle. Although the hydraulic braking devices 17 are braking devices that provide the wheels with braking force using hydraulic pressure, it is also possible to apply electric braking devices that provide the wheels with braking force by electric motors in place of the hydraulic braking devices.

The vehicle is provided with an accelerator opening sensor 5 to detect the amount of pressing on an accelerator pedal and a brake pressing force sensor 6 to detect the amount of pressing (pressing force) on a brake pedal. The vehicle is also provided with a steering angle sensor 7 to detect an operation amount (including an operation direction) of a steering wheel. In addition, the vehicle is also provided with a yaw rate sensor 8 to detect a yaw rate generated in the vehicle and wheel speed sensors 16 to detect rotational speeds (wheel speeds) of the front wheels 1FL and 1FR and the rear wheels 1RL and 1RR. Further, the vehicle is provided with a travel characteristic selection switch 9 that enables selection of a traveling state of the vehicle, for example, travel characteristics when the vehicle is turning. The travel characteristic selection switch 9 allows selection of various modes, such as a sport mode in which the vehicle can exert quick turning characteristics on a winding road or the like, an economy mode that suppresses power consumption from the battery 4, and a snow mode that provides stable travel characteristics on a slippery road surface like a snow road.

The controller 11 is an electronic control unit (ECU) that controls operating states of the front motor 2F and the rear motor 2R, in particular the braking/driving forces (braking/driving torque) provided to the front wheels 1FL and 1FR and the rear wheels 1RL and 1RR, respectively. Therefore, the controller 11 includes a computer system that has advanced calculation processing capability. The computer system, as with a well-known computer system, includes a processor 12 that exerts advanced calculation processing capability and a storage device 13 that stores information about programs and sensor signals. The processor 12 is constituted by, for example, a central processing unit (CPU) or a micro-processing unit (MPU). The storage device 13 includes a semiconductor storage device, a magnetic storage device, and an optical storage device. The storage device 13 may further include a memory that is used as registers, a cache memory, and a main storage device. Calculation processing executed by the controller 11 is achieved by, for example, the processor 12 executing computer programs stored in the storage device 13 of the controller 11. Note that although in the present embodiment, the configuration in which the following logic is executed by the controller 11 is employed, however, for example, the controller 11 may be configured to control only the operating states of the front motor 2F and the rear motor 2R and the following logic is executed by a separate controller.

In addition, the vehicle is provided with a brake controller 18 that is capable of individually controlling braking forces applied to the wheels by the hydraulic braking devices 17 provided to the front wheels 1FL and 1FR and the rear wheels 2RL and 2RR and a hydraulic pressure unit 19 that adjusts hydraulic pressure to the hydraulic braking devices 17 of the wheels in accordance with control signals from the brake controller 18. The hydraulic pressure unit 19 includes a hydraulic pressure adjustment circuit that is capable of not only maintaining or reducing but also increasing the hydraulic pressure of the hydraulic braking devices 17 of the wheels. The brake controller 18 is capable of performing not only anti-skid control to maintain or reduce the hydraulic pressure of a hydraulic braking device 17 of a wheel the wheel speed of which is too low with respect to vehicle speed (vehicle body speed) at the time of hydraulic braking but also (electronically controlled braking force distribution) control to increase the hydraulic pressure of a hydraulic braking device 17 of a wheel the wheel speed of which is too high with respect to the vehicle speed (vehicle body speed) at the time of acceleration of the vehicle. In addition, the brake controller 18 is also capable of performing yaw rate control to cause a yaw rate generated in the vehicle to coincide with a target yaw rate matching traveling speed and a steering angle (front wheel turning angle) of the vehicle. As the target yaw rate, for example, a reference yaw rate, which will be described later, matching the front wheel turning angle (steering angle) can be used as it is, or a yaw rate obtained by adjusting the reference yaw rate with a proportional gain can be used. In addition, as a form of the yaw rate control of the vehicle, a well-known hydraulic control, such as providing hydraulic pressure only to a hydraulic braking device 17 of a front turning outer wheel (front outside wheel of the turn) when a turning state of the vehicle is an oversteer state, that is, when the yaw rate generated in the vehicle is greater than the target yaw rate and providing hydraulic pressure to hydraulic braking devices 17 of rear right and left wheels and the front turning outer wheel when the turning state of the vehicle is an understeer state, can be applied. When using an electric braking device, it is only necessary to replace "hydraulic pressure" in the description with "braking force".

FIG. 2 illustrates logic of calculation processing that is executed by the controller 11 and that calculates command values of front motor torque and rear motor torque that the front motor 2F and the rear motor 2R are commanded to generate, respectively and outputs command signals. In the calculation processing, while target front motor torque and target rear motor torque are calculated by a target front/rear motor torque calculation unit 14, a front motor torque correction value and a rear motor torque correction value are calculated by a front/rear motor torque correction value calculation unit 15. A value obtained by adding the front motor torque correction value to the target front motor torque is output as a front motor torque command value, and a value obtained by adding the rear motor torque correction value to the target rear motor torque is also output as a rear motor torque command value. The front motor torque correction value and the rear motor torque correction value are set depending on whether a state of friction force between the vehicle (tire) and a road surface is in a grip area or a non-grip area. The term "grip" means "to hold firmly" like the meaning of the English word "grip", and in light of the above description, the term "grip" means that a tire is holding the road surface firmly. In general, in the grip area, a cornering force of a tire is considered to be proportional to a vehicle body slip angle of the vehicle (in an area where the vehicle body slip angle is small), and a proportionality coefficient in the proportionality relationship is referred to as cornering power. The vehicle body slip angle of the vehicle depends on a turning angle of the front wheels (steering angle), traveling speed of the vehicle, and an acceleration/deceleration state of the vehicle, and therefore, the cornering force of a tire in the grip area is proportional to operation input by a driver. Meanwhile, in the non-grip area, the cornering force of a tire is not proportional to operation input by the driver. Note that the "vehicle body slip angle" refers to an angle formed by a direction of the vehicle body and a direction of a speed vector of the vehicle.

As is conjectured from the above description, the target front motor torque and the target rear motor torque are reference values to which the front motor torque correction value and the rear motor torque correction value are added, respectively. In the present embodiment, a driver-demanded braking/driving force demanded by the driver is calculated based on the amount of pressing on the accelerator pedal detected by the accelerator opening sensor 5 and the amount of pressing (pressing force) on the brake pedal detected by the brake pressing force sensor 6. At the time of the calculation, filtering processing can be applied as appropriate. To the driving force of the driver-demanded braking/driving force, driving torque obtained by causing the front motor 2F and the rear motor 2R to perform powering operation corresponds. Likewise, to the braking force of the driver-demanded braking/driving force, braking torque obtained by causing the front motor 2F and the rear motor 2R to perform regenerative operation corresponds. When the driver-demanded braking/driving force is calculated and set at a predetermined sampling period, the amount of increase or decrease from a previously set value is adjusted depending on a travel mode selected by the travel characteristic selection switch 9. The driver-demanded braking/driving force calculated and set in this way is, for example, allocated to the front axle 10F and the rear axle 10R with a preset braking/driving force allocation ratio between the front and rear wheels, and target front motor torque of the front motor 2F to achieve front axle braking/driving force and target rear motor torque of the rear motor 2R to achieve rear axle braking/driving force are calculated and set. The braking/driving force allocation ratio between the front and rear wheels can be set to, for example, 50:50 in such a way that the driver-demanded braking/driving force is equally allocated to the front axle 10F and the rear axle 10R. In the present embodiment, it is configured such that the driver-demanded braking/driving force is allocated only to the rear wheels (or the front wheels) when the steering wheel is not steered and the driver-demanded braking/driving force is allocated to both the front wheels and the rear wheels when the steering wheel is steered. In the latter case, the braking/driving force can be arbitrarily allocated to the front and rear wheels. Note that when a sum of braking torque values obtained by causing both motors to perform regenerative operation is less than the driver-demanded braking/driving force, the hydraulic braking devices 17 (or electric braking devices) may be configured to compensate for the deficiency in accordance with not-illustrated separate calculation processing.

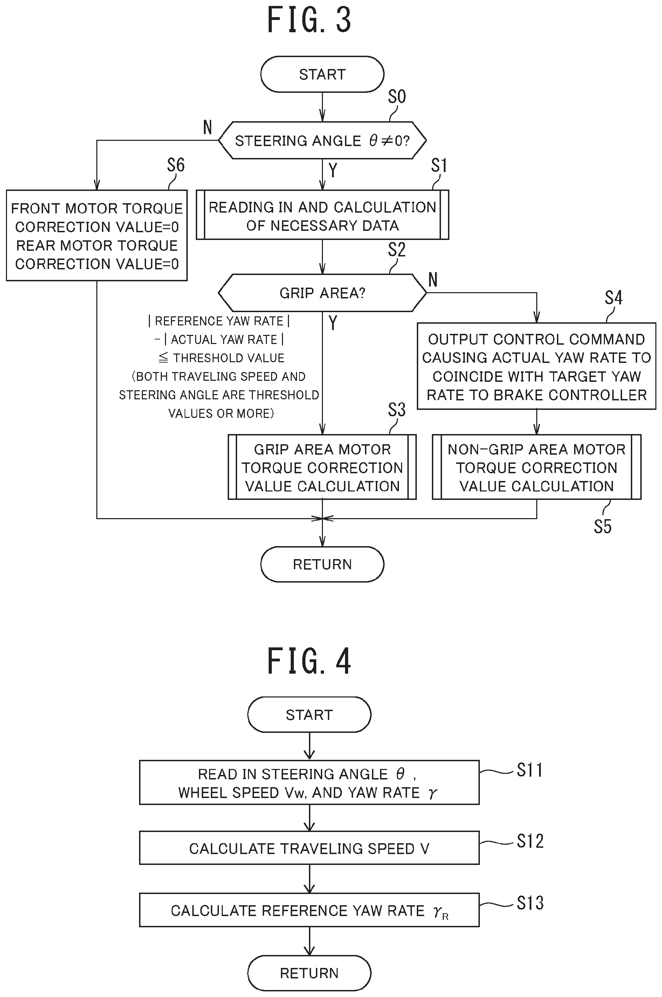

Next, an example of the calculation processing executed within the controller 11 as the front/rear motor torque correction value calculation unit 15 will be described using a flowchart in FIG. 3. The calculation processing is executed, for example, at a predetermined sampling period, and first, in step S0, whether or not the steering angle $\theta$ is not 0 is determined, and when the steering angle $\theta$ is not 0, the process proceeds to step S1, and otherwise, that is, when the steering angle $\theta$ is 0, the process proceeds to step S6. In the determination of the steering angle $\theta$, a dead zone where the steering wheel is determined not to be steered regardless of an actual steering angle may be provided in a vicinity of a position at which the steering wheel is in a neutral state. In step S1, necessary data are read in and calculated in accordance with separate calculation processing, which will be described later. Next, the process proceeds to step S2, whether or not the friction force between the vehicle (tire) and the road surface is in the grip area is determined, and when the friction force is in the grip area, the process proceeds to step S3 and otherwise, that is, when the friction force is in the non-grip area, the process proceeds to step S4. The determination of whether or not the friction force is in the grip area in this example is performed by determining whether or not a difference obtained by subtracting an absolute value of a yaw rate detected by the yaw rate sensor 8 (actual yaw rate) from an absolute value of a reference yaw rate, which will be described later, is greater than or equal to a threshold value (for example, 3 deg/sec), and when the difference is greater than or equal to the threshold value, the friction force is determined to be in the grip area and otherwise, the friction force is determined to be in the non-grip area. On this occasion, it may be configured such that when the snow mode is selected by the travel characteristic selection switch, the threshold value is made small, and making the threshold value small enables the friction force to be determined to be in the non-grip area at an earlier timing. Note that determination of whether the yaw rate (the actual yaw rate and the target yaw rate) is positive or negative will be described in a later stage. In step S3, the motor torque (front and rear motor torque) correction values in the grip area are calculated in accordance with separate calculation processing, which will be described later, and subsequently the process returns to the original process. In step S4, a control command to cause a yaw rate generated in the vehicle (actual yaw rate) to coincide with the target yaw rate is output to the brake controller 18, and subsequently the process proceeds to step S5. In step S5, the motor torque (front and rear motor torque) correction values in the non-grip area are calculated in accordance with separate calculation processing, which will be described later, and subsequently the process returns to the original process. In addition, in step S6, the front motor torque correction value and the rear motor torque correction value are both set to 0 and subsequently the process returns to the original process. Note that the above-described determination of whether or not the friction force is in the grip area is made by, for example, setting threshold values for traveling speed V and the steering angle $\theta$ ($\propto$ a front wheel turning angle $\delta_F$) of the vehicle and determining whether or not both the traveling speed V and the steering angle $\theta$ are greater than or equal to the threshold values, and when both the traveling speed V and the steering angle $\theta$ are greater than or equal to the threshold values, it is determined that the friction force is in the non-grip area. This is because lateral acceleration generated in the vehicle that is calculated using the traveling speed V and the front wheel turning angle $\delta_F$ ($\propto$ the steering angle $\theta$) has a saturation point corresponding to a friction force between the vehicle (tire) and the road surface and it is considered that when, for example, a calculated lateral acceleration is 0.6 G or more, the friction force is in the non-grip area. Therefore, threshold values corresponding to the saturation point of the lateral acceleration are set for the traveling speed V and the steering angle θ, and the friction force is determined to be in the non-grip area when both the traveling speed V and the steering angle θ are greater than or equal to the threshold values. Note that when the snow mode is selected by the travel characteristic selection switch, setting the threshold values to be set for the traveling speed V and the steering angle θ to values corresponding to a lateral acceleration of 0.4 G causes the friction force to be determined to be in the non-grip area at an earlier timing.

Next, a subprogram executed in step S1 in the calculation processing in FIG. 3 will be described using a flowchart in FIG. 4. In the calculation processing, first, in step S11, a steering angle θ of the steering wheel detected by the steering angle sensor 7 and wheel speeds Vw of the front wheels 1FL and 1FR and the rear wheels 1RL and 1RR detected by the wheel speed sensors 16 are read in. Next, the process proceeds to step S12, and traveling speed V of the vehicle is calculated using the wheel speeds Vw read in in step S11. The traveling speed V may, for example, be calculated from an average value of the wheel speeds Vw of all the wheels or calculated from an average value of remaining wheel speeds Vw with the exception of a wheel speed Vw that deviates from the other wheel speeds Vw, that is, a wheel speed Vw with a large (small) slip ratio. Another arbitrary calculation method may also be applicable. Next, the process proceeds to step S13, a reference yaw rate $\gamma_R$ is calculated in accordance with the formula 1 below, and subsequently the process returns to the original process. In the formula 1, $\delta_F$ denotes a front wheel turning angle, and the front wheel turning angle is generally in a proportional relationship with a steering angle θ. In addition, m is vehicle mass, I is yaw inertia radius, L is a wheelbase, $L_F$ is distance from the center of gravity of the vehicle to the front axle 10F, $L_R$ is distance from the center of gravity of the vehicle to the rear axle 10R, $K_F$ is equivalent cornering power of the front wheels 1FL and 1FR, and $K_R$ is equivalent cornering power of the rear wheels 1RL and 1RR. Note that positivity or negativity of the reference yaw rate $\gamma_R$ is given in accordance with a direction of the yaw rate γ, and is given by differentiating a sign of the front wheel turning angle $\delta_F$ in the formula 1 depending on whether the steering wheel is turned counterclockwise or clockwise. When a positive or negative sign is assigned to the actual yaw rate γ detected by the yaw rate sensor 8 depending on the direction of the yaw rate that is generated in the vehicle, the sign of the reference yaw rate $\gamma_R$, that is, the sign of the front wheel turning angle $\delta_F$, is only required to be assigned in such a way as to match the sign of the actual yaw rate γ.

[Math 1]

$$\gamma_R(s) = G_\gamma \cdot \frac{1+T_\gamma s}{1+\dfrac{2\zeta s}{\omega n}+\dfrac{s^2}{\omega n^2}} \cdot \delta_F(s) \qquad \cdots (1)$$

$$G_\gamma = \frac{1}{1+AV^2} \cdot \frac{V}{L} \qquad \cdots (1\text{-}1)$$

$$T_\gamma = \frac{mL_F V}{2LK_R} \qquad \cdots (1\text{-}2)$$

$$A = -\frac{m}{2L^2} \cdot \frac{L_F K_F - L_R K_R}{K_F K_R} \qquad \cdots (1\text{-}3)$$

$$\zeta = \frac{m(L_F^2 K_F + L_R^2 K_R) + I(K_F + K_R)}{L\sqrt{mIK_F K_R (1+AV^2)}} \qquad \cdots (1\text{-}4)$$

$$\omega_n = \frac{2L}{V}\sqrt{\frac{K_F K_R}{mI}}\sqrt{1+AV^2} \qquad \cdots (1\text{-}5)$$

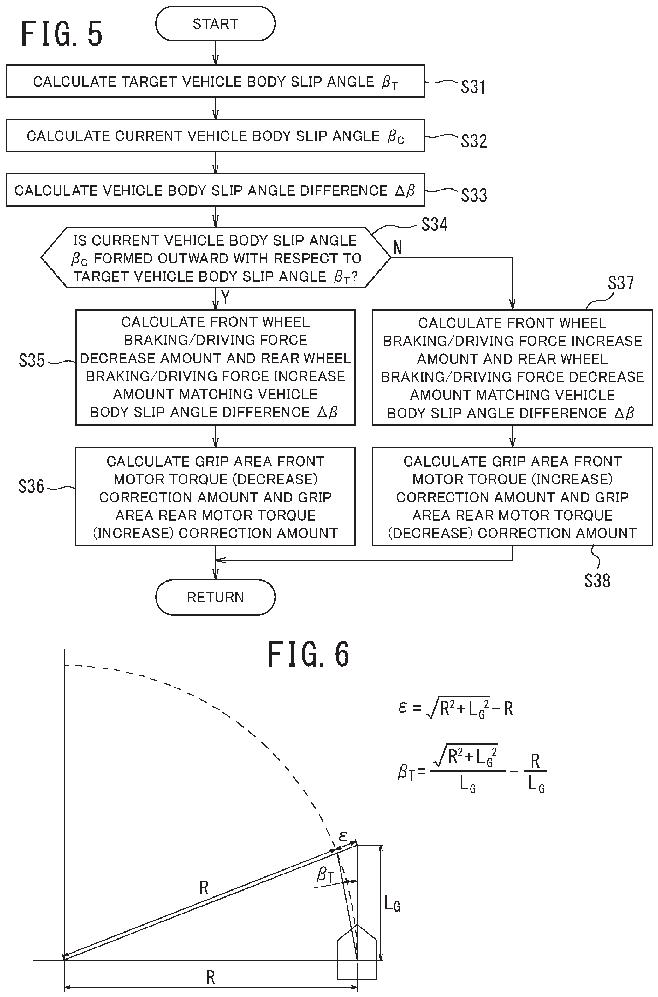

Next, a subprogram executed in step S3 in the calculation processing in FIG. 3 will be described using a flowchart in FIG. 5. In this calculation processing, first, in step S31, a target vehicle body slip angle $\beta_T$ in the grip area is calculated. The target vehicle body slip angle $\beta_T$ is calculated and set as described below. For example, when the vehicle is traveling while making a steady circular turn in the grip area as illustrated by a dashed line in FIG. 6, the driver gazes at a position ahead of the vehicle, and distance to the position at which the driver gazes is referred to as forward gaze distance $L_G$. The forward gaze distance $L_G$ is expressed as a product of the traveling speed V of the vehicle and forward gaze time t, and the forward gaze time t is defined as the amount of time in which the driver can modify a traveling direction (travel arrival position) of the vehicle and is generally 1 to 3 seconds. When radius of a steady circle along which the vehicle performs turning traveling is denoted by R, since the friction force is in the grip area, $R = V/\gamma_R$ (in this case, the result is the same with $\gamma_R$ replaced by $\gamma$) holds and a deviation amount $\epsilon$ from a turning trajectory to the forward gaze position is obtained by $\epsilon = (R^2 + L_G^2)^{1/2} - R$. When an angle formed by bringing the forward gaze position back to a position on the turning trajectory (which is a steady circle, and also referred to as a target turning trajectory) is referred to as a target vehicle body slip angle $\beta_T$, since $\beta_T$ is sufficiently small, $L_G \cdot \sin\beta_T \approx \epsilon$ holds and $\beta_T$ is further expressed by the formula 2 below. Note that a sign of the target vehicle body slip angle $\beta_T$ is caused to match the sign of the front wheel turning angle $\delta_F$.

[Math 2]

$$\beta_T = \frac{\sqrt{R^2 + L_G^2}}{L_G} - \frac{R}{L_G} \qquad \cdots (2)$$

Next, the process proceeds to step S32, and a current vehicle body slip angle $\beta_C$ in the grip area is calculated in accordance with the formula 3 below. As described before, when a positive or negative sign is assigned to the front wheel turning angle $\delta_F$, a sign is also assigned to the current vehicle body slip angle $\beta_C$. Next, the process proceeds to step S33, and a vehicle body slip angle difference $\Delta\beta$ is calculated by subtracting the current vehicle body slip angle $\beta_C$ from the target vehicle body slip angle $\beta_T$. Next, the process proceeds to step S34, whether the current vehicle body slip angle $\beta_C$ is formed outward with respect to the target vehicle body slip angle $\beta_T$ or not (inward) is determined, and when the current vehicle body slip angle $\beta_C$ is formed outward, the process proceeds to step S35 and otherwise, that is, when the current vehicle body slip angle $\beta_C$ is formed inward, the process proceeds to step S37. The current vehicle body slip angle $\beta_C$ being formed outward with respect to the target vehicle body slip angle $\beta_T$ can be determined by a value obtained by subtracting an absolute value of the current vehicle body slip angle $\beta_C$ from an absolute value of the target vehicle body slip angle $\beta_T$ being a positive value. In step S35, since the current vehicle body slip angle $\beta_C$ is formed outward with respect to the target vehicle body slip angle $\beta_T$, a front wheel braking/driving force decrease amount and a rear wheel braking/driving force increase amount matching the vehicle body slip angle difference $\Delta\beta$ are calculated. The front wheel braking/driving force decrease amount and the rear wheel braking/driving force increase amount are only required to be set in accordance with a so-called friction circle theory. Next, the process proceeds to step S36, a grip area front wheel motor torque (decrease) correction amount matching the front wheel braking/driving force decrease amount is calculated and a grip area rear wheel motor torque (increase) correction amount matching the rear wheel braking/driving force increase amount is also calculated, and subsequently the process returns to the original process. In addition, in step S37, since the current vehicle body slip angle $\beta_C$ is formed inward with respect to the target vehicle body slip angle $\beta_T$, a front wheel braking/driving force increase amount and a rear wheel braking/driving force decrease amount matching the vehicle body slip angle difference $\Delta\beta$ are calculated. The front wheel braking/driving force increase amount and the rear wheel braking/driving force decrease amount are also set in accordance with the friction circle theory. Next, the process proceeds to step S38, a grip area front wheel motor torque (increase) correction amount matching the front wheel braking/driving force increase amount is calculated and a grip area rear wheel motor torque (decrease) correction amount matching the rear wheel braking/driving force decrease amount is also calculated, and subsequently the process returns to the original process.

[Math 3]

$$\beta_C(s) = G_\beta \cdot \frac{1 + T_\beta s}{1 + \dfrac{2\zeta s}{\omega n} + \dfrac{s^2}{\omega n^2}} \cdot \delta_F(s) \qquad \cdots (3)$$

$$G_\beta = \frac{1 - \dfrac{mL_F}{2LL_RK_R}V^2}{1 + AV^2} \cdot \frac{L_R}{L} \qquad \cdots (3\text{-}1)$$

$$T_\beta = \frac{IV}{2LL_RK_R} \cdot \frac{1}{1 - \dfrac{mL_F}{2LL_RK_R}V^2} \qquad \cdots (3\text{-}2)$$

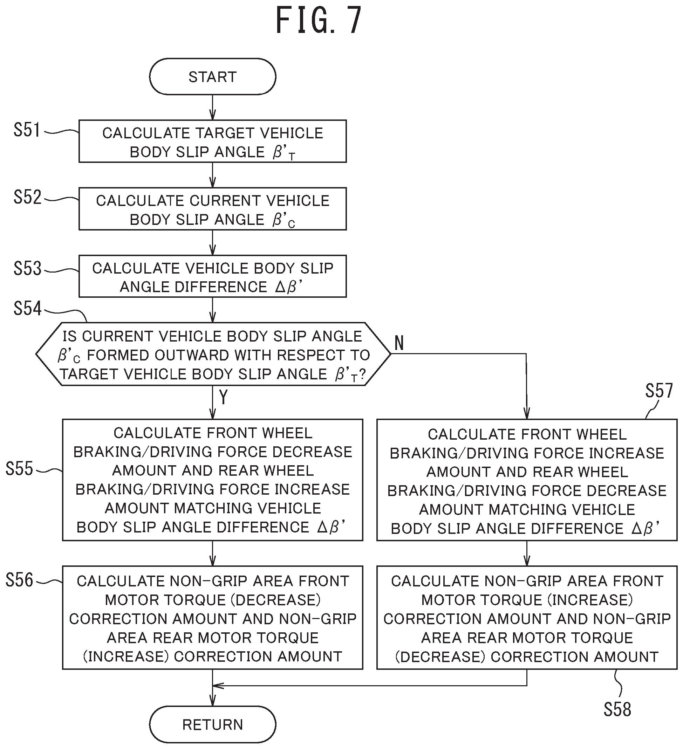

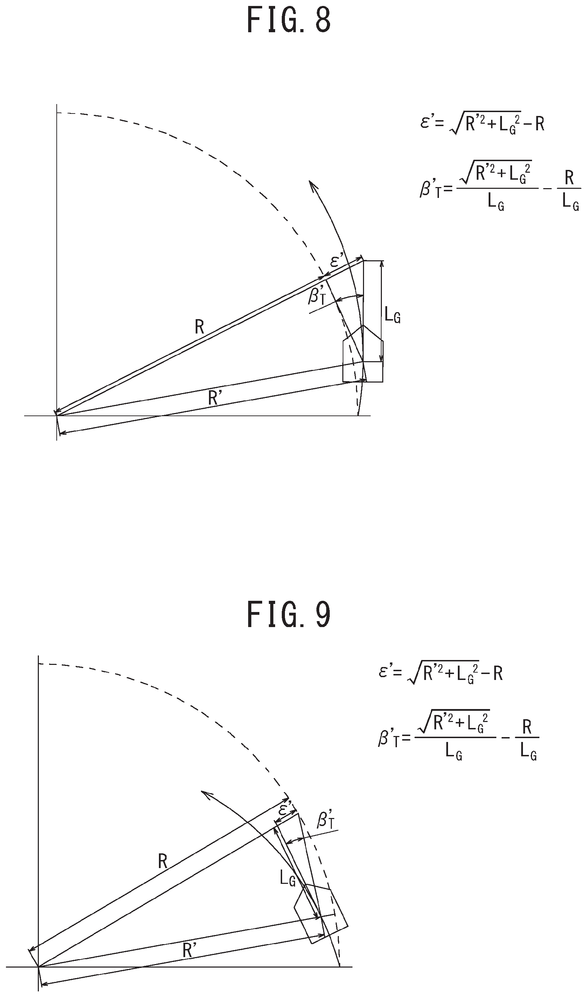

Next, a subprogram executed in step S5 in the calculation processing in FIG. 3 will be described using a flowchart in FIG. 7. In this calculation processing, first, in step S51, a target vehicle body slip angle $\beta'_T$ in the non-grip area is calculated. The target vehicle body slip angle $\beta'_T$ is calculated and set as described below. For example, FIG. 8 illustrates the forward gaze distance $L_G$ (forward gaze position) and a deviation amount $\varepsilon'$ of the forward gaze position from the target turning trajectory when the turning state of the vehicle is the understeer state in the non-grip area. A circular arc drawn by a dashed line in the drawing is the target turning trajectory, and turning radius R of the target turning trajectory is given by R = $V/\gamma_R$. In addition, actual turning radius R' of the vehicle in this case is expressed as R' = V/y using the actual yaw rate $\gamma$. The forward gaze distance $L_G$ is the same as the forward gaze distance $L_G$ in the grip area. A change angle of the traveling direction of the vehicle that causes the target gaze position matching a turning trajectory deviating from the target turning trajectory to coincide with a position on the target turning trajectory in the understeer state is defined to be the target vehicle body slip angle $\beta'_T$. On the other hand, FIG. 9 illustrates the forward gaze distance $L_G$ (forward gaze position) and a deviation amount $\varepsilon'$ of the forward gaze position from the target turning trajectory when the turning state of the vehicle is the oversteer state in the non-grip area. The actual turning radius R' of the vehicle in this case is also expressed as R' = V/y using the actual yaw rate $\gamma$. A change angle of the traveling direction of the vehicle that causes the target gaze position based on a turning trajectory deviating from the target turning trajectory to coincide with a position on the target turning trajectory in the oversteer state is defined to be the target vehicle body slip angle $\beta'_T$. The deviation amounts $\varepsilon'$ from the target turning trajectory to the forward gaze positions in these cases can be obtained by $\varepsilon' = (R'^2 + L_G{}^2)^{1/2}$ - R. Since the deviation amount $\varepsilon'$ is approximated by $\varepsilon' \approx L_G \cdot \sin\beta'_T$, the target vehicle body slip angle $\beta'_T$ to bring back the turning trajectory to the target turning trajectory of the vehicle by correcting the deviation amount $\varepsilon'$ is expressed by the formula 4 below.

[Math 4]

$$\beta'_T = \frac{\sqrt{R'^2 + L_G{}^2}}{L_G} - \frac{R}{L_G} \qquad \cdots (4)$$

Next, the process proceeds to step S52, and a current vehicle body slip angle $\beta'_C$ in the non-grip area is calculated in accordance with the formula 5 below. The current vehicle body slip angle $\beta'_C$ in the non-grip area is a vehicle body slip angle obtained by multiplying the current vehicle body slip angle $\beta_C$ in the grip area by a ratio of the actual yaw rate $\gamma$ and the reference yaw rate $\gamma_R$ (in the grip area). Next, the process proceeds to step S53, and a vehicle body slip angle difference $\Delta\beta'$ in the non-grip area is calculated by subtracting the current vehicle body slip angle $\beta'_C$ in the non-grip area from the target vehicle body slip angle $\beta'_T$ in the non-grip area. Next, the process proceeds to step S54, whether the current vehicle body slip angle $\beta'_C$ is formed outward with respect to the target vehicle body slip angle $\beta'_T$ or not (inward) is determined, and when the current vehicle body slip angle $\beta'_C$ is formed outward, the process proceeds to step S55 and otherwise, that is, when the current vehicle body slip angle $\beta'_C$ is formed inward, the process proceeds to step S57. The current vehicle body slip angle $\beta'_C$ being formed outward with respect to the target vehicle body slip angle $\beta'_T$ can be determined by a value obtained by subtracting an absolute value of the current vehicle body slip angle $\beta'_C$ from an absolute value of the target vehicle body slip angle $\beta'_T$ being a positive value. In step S55, since the current vehicle body slip angle $\beta'_C$ is formed outward with respect to the target vehicle body slip angle $\beta'_T$, a front wheel braking/driving force decrease amount and a rear wheel braking/driving force increase amount matching the vehicle body slip angle difference $\Delta\beta'$ are calculated. Next, the process proceeds to step S56, a non-grip area front wheel motor torque (decrease) correction amount matching the front wheel braking/driving force decrease amount is calculated and a non-grip area rear wheel motor torque (increase) correction amount matching the rear wheel braking/driving force increase amount is also calculated, and subsequently the process returns to the original process. In addition, in step S57, since the current vehicle body slip angle $\beta'_C$ is formed inward with respect to the target vehicle body slip angle $\beta'_T$, a front wheel braking/driving force increase amount and a rear wheel braking/driving force decrease amount matching the vehicle body slip angle difference $\Delta\beta'$ are calculated. Next, the process proceeds to step S58, a non-grip area front wheel motor torque (increase) correction amount matching the front wheel braking/driving force increase amount is calculated and a non-grip area rear wheel motor torque (decrease) correction amount matching the rear wheel braking/driving force decrease amount is also calculated, and subsequently the process returns to the original process. Note that the amount of change in the braking/driving force is obtained in accordance with the friction circle theory, in a similar manner as described above.

[Math 5]

$$\beta'_C(s) = \frac{\beta_C(s)}{\gamma_R(s)}\, \gamma(s) = \frac{G_\beta}{G_\gamma} \cdot \frac{1 + T_\beta S}{1 + T_\gamma S}\, \gamma(s) \qquad \cdot \cdot \cdot (5)$$

According to the calculation processing in FIG. 3, whether the friction force between the vehicle (tire) and the road surface is in the grip area or in the non-grip area is determined, and when the friction force is in the grip area, a vehicle body slip angle that causes the vehicle position at the forward gaze position to coincide with a position on the target turning trajectory is set as the target vehicle body slip angle $\beta_T$, and the front motor torque and the rear motor torque, that is, the front wheel braking/driving force and the rear wheel braking/driving force, are controlled in such a way as to achieve the target vehicle body slip angle $\beta_T$. Although in the grip area, the vehicle is supposed to travel along a target turning trajectory matching the traveling speed V and the steering angle $\theta$ ($\propto$ the front wheel turning angle $\delta_F$), the actual vehicle body slip angle $\beta$ actually generated in the vehicle changes according to the traveling speed as a general characteristic of a vehicle, as will be described in a later stage. Although due to the change in the actual vehicle body slip angle $\beta$, the driver performs corrective steering to correct the vehicle trajectory, since in the present embodiment, the front wheel braking/driving force and the rear wheel braking/driving force are controlled in such a way that the current vehicle body slip angle $\beta_C$ coincides with the target vehicle body slip angle $\beta_T$, such corrective steering becomes unnecessary or almost unnecessary. In contrast, when the friction force is in the non-grip area, since, for example, a control command is output to the brake controller 18 in such a way that the target yaw rate $\gamma_T$ matching the traveling speed V and the front wheel turning angle $\delta_F$ ($\propto$ the steering angle $\theta$) of the vehicle is achieved, the turning state of the vehicle in the non-grip area, such as the understeer state and the oversteer state, is corrected toward the neutral steer state. In addition, in the non-grip area, a vehicle body slip angle that causes the vehicle position at the forward gaze position to coincide with a position on the target turning trajectory is also set as a target vehicle body slip angle $\beta'_T$ in the non-grip area, and the front motor torque and the rear motor torque, that is, the front wheel braking/driving force and the rear wheel braking/driving force, are controlled in such a way as to achieve the target vehicle body slip angle $\beta'_T$. Although turning behavior of the vehicle is corrected toward the neutral steer state by the yaw rate control performed by the brake controller 18, there is a possibility that before the correction is made, the actual turning trajectory of the vehicle had deviated from the target turning trajectory. In consideration of such a case, the forward gaze position is calculated according to the turning trajectory of the vehicle having deviated from the target turning trajectory, and the vehicle body slip angle that causes the forward gaze position to coincide with a position on the target turning trajectory is set as the target vehicle body slip angle $\beta'_T$ in the non-grip area. Therefore, through the control of the front wheel braking/driving force and the rear wheel braking/driving force that achieves the target vehicle body slip angle $\beta'_T$, corrective steering including steering to bring back the turning trajectory of the vehicle to the target turning trajectory becomes unnecessary or almost unnecessary.

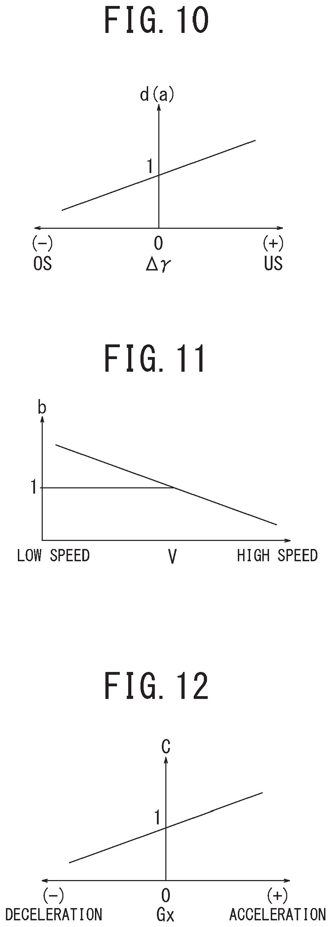

Next, another method for setting the target vehicle body slip angle $\beta'_T$ in the non-grip area will be described. The formula 4' below is a formula to calculate the target vehicle body slip angle $\beta'_T$ in the non-grip area by multiplying the afore-described current vehicle body slip angle $\beta_C$ in the grip area by a proportional gain d. The proportional gain d can be set using the yaw rate difference $\Delta\gamma$ obtained by subtracting the actual yaw rate $\gamma$ from the target yaw rate $\gamma_T$, as illustrated in, for example, FIG. 10. Since when the yaw rate difference $\Delta\gamma$ is a positive value, the vehicle is in the understeer state in which the actual yaw rate $\gamma$ is insufficient with respect to the target yaw rate $\gamma_T$, the target vehicle body slip angle $\beta'_T$ is set to be smaller than the current vehicle body slip angle $\beta_C$ in the grip area by setting the proportional gain d to a value smaller than 1. In contrast, since when the yaw rate difference $\Delta\gamma$ is a negative value, the vehicle is in the oversteer state in which the actual yaw rate $\gamma$ is excessive with respect to the target yaw rate $\gamma_T$, the target vehicle body slip angle $\beta'_T$ is set to be larger than the current vehicle body slip angle $\beta_C$ in the grip area by setting the proportional gain d to a value larger than 1. In this example, the proportional gain d is set to linearly increase as the yaw rate difference $\Delta\gamma$ increases. Regarding the

proportional gain d, a variation in which a dead zone where the proportional gain d is 1 is set around a point where the yaw rate difference $\Delta\gamma$ is 0 or a variation in which the proportional gain d is set to saturate in an area where the absolute value of the yaw rate difference $\Delta\gamma$ is large may be employed.

[Math 6]

$$\beta'_T(s) = d \cdot G_\beta \cdot \frac{1+T_\beta s}{1+\dfrac{2\zeta s}{W_n}+\dfrac{s^2}{W_n^2}} \cdot \delta_F(s) \qquad \cdot \cdot \cdot (4')$$

The above-described proportional gain d may also reflect other traveling states of the vehicle. For example, it is possible to assume that a component of the proportional gain corresponding to the yaw rate difference $\Delta\gamma$ is a gain component a and a component corresponding to the traveling speed V of the vehicle is a gain component b, and calculate the proportional gain d by d = a $\times$ b. The gain component b corresponding to the traveling speed V can be set as illustrated in, for example, FIG. 11. In a general vehicle, a vehicle body slip angle that is actually generated in the vehicle is formed outward in the low-speed range and inward in the high-speed range, and the actual vehicle body slip angle serves as deviation of the forward gaze position from the target turning trajectory in the grip area. Therefore, setting the target vehicle body slip angle $\beta'_T$ to an inward angle in the low-speed range and an outward angle in the high-speed range enables the vehicle position at the forward gaze position to be brought back to a position on the target turning trajectory. In this case, when, for example, the target vehicle body slip angle is set in such a manner that the lower the traveling speed is, the larger the magnitude of inward target vehicle body slip angle becomes and the higher the traveling speed is, the larger the magnitude of outward target vehicle body slip angle becomes, the positional displacement can be corrected more accurately. In order to reflect the setting method in the target vehicle body slip angle $\beta'_T$ in the non-grip area, setting the gain component b to linearly decrease as the traveling speed V increases as illustrated in FIG. 11 enables the target vehicle body slip angle $\beta'_T$ to be set in such a manner that the lower the traveling speed is, the more inward the target vehicle body slip angle $\beta'_T$ is set and the higher the traveling speed is, the more outward the target vehicle body slip angle $\beta'_T$ is set. Note that in the actual vehicle, only setting the gain component b corresponding to the traveling speed V to a fixed value less than 1, for example, 0.8, enables the target vehicle body slip angle $\beta'_T$ to be properly set with respect to a change in the traveling speed V. When the afore-described tendency of the vehicle body slip angle with respect to the traveling speed that actually occurs in the vehicle is considered using the vehicle body slip angle gain obtained by dividing the vehicle body slip angle by the steering angle, multiplying the vehicle body slip angle gain by d = 0.8 enables a target vehicle body slip angle $\beta'_T$ that causes the vehicle body to be directed inward in the low-speed range and outward in the high-speed range with respect to the actual vehicle body slip angle, that is, a target vehicle body slip angle $\beta'_T$ similar to the above-described target vehicle body slip angle $\beta'_T$, to be set.

Further, it is also possible to assume that a component of the proportional gain corresponding to longitudinal acceleration $G_X$ of the vehicle is a gain component c and calculate the proportional gain d by d = a $\times$ c or d = a $\times$ b $\times$ c. That is, since while the vehicle is accelerating, a rear wheel load increases whereas a front wheel load decreases, the vehicle tends to point outward. Conversely, since while the vehicle is decelerating, the rear wheel load decreases whereas the front wheel load increases, the vehicle tends to point inward. Therefore, by forming the target vehicle body slip angle $\beta'_T$ inward at the time of acceleration and outward at the time of deceleration, the turning trajectory of the vehicle can be brought close to the target turning trajectory. In this case, since the amount of change in wheel loads becomes larger as the absolute value of the longitudinal acceleration $G_X$ increases, setting the gain component c to linearly increase as the longitudinal acceleration $G_X$ increases enables the target vehicle body slip angle $\beta'_T$ to be set in such a manner that the larger the acceleration is, the more inward the target vehicle body slip angle $\beta'_T$ is formed and the larger the deceleration is, the more outward the target vehicle body slip angle $\beta'_T$ is formed as illustrated in FIG. 12, which enables change in the direction of the vehicle in association with acceleration and deceleration to be corrected.

Although the vehicular braking/driving force control method and the vehicular braking/driving force control device according to the embodiment are described above, the present invention is not limited to the configuration described in the above-described embodiment, and various modification can be made within the scope of the present invention. For example, although in the above-described embodiment, the braking/driving forces of the front wheels and the rear wheels are controlled by the front wheel motor torque and the rear wheel motor torque (including powering operation and regenerative operation), respectively, the braking/driving force control method and the braking/driving force control device of the present invention are also applicable to a vehicle in which driving force of an engine is transmitted to the front wheels and/or the rear wheels and braking force of the front and rear wheels is adjusted by a braking device using fluid pressure (hydraulic pressure) or a motor. Since among the braking/driving forces, torque of the motors during the powering operation corresponds to the driving force and torque of the motors during the regenerative operation corresponds to the braking force, it is only required to control the driving force by the engine and control the braking force by the braking device.

However, in such a case, a yaw rate control device, as will be described later, other than the brake controller 18 is sometime required to be used.

In addition, although in the above-described embodiment, the brake controller 18 capable of individually controlling the braking forces of the wheels is applied as the yaw rate control device for controlling the yaw rate generated in the vehicle, various types of yaw rate control devices can be applied in place of the brake controller 18. Examples of such a yaw rate control device include a front wheel turning angle control device that controls the turning angle of the front wheels and a rear wheel turning angle control device that enables the turning angle of the rear wheels to be controlled and that controls the turning angle of the rear wheels. In the above-described yaw rate control devices, to the control form that causes the yaw rate generated in the vehicle to coincide with the target yaw rate, a conventionally existing or conventionally proposed control form can be applied.

In addition, the braking/driving force control method and the braking/driving force control device of the present invention are also applicable to a vehicle that controls only the braking/driving force of the front wheels or only the braking/driving force of the rear wheels. In addition, the braking/driving force control method and the braking/driving force control device of the present invention are likewise applicable to a vehicle that is capable of controlling the braking/driving force with respect to only the front wheels or only the rear wheels. Since the principle of the braking/driving force control is not different among such modes of embodiment, with regard to details of the control, it is only required to, for example, leave a description regarding controllable wheels and neglect a description regarding uncontrollable rear wheels or neglect a description regarding uncontrollable front wheels.

As described above, a vehicular braking/driving force control device of the present embodiment determines whether the vehicle is in a non-grip area where the cornering force of a tire is not proportional to operation input by a driver. In the non-grip area, the vehicular braking/driving force control device outputs a control command to a brake controller 18 to bring an actual yaw rate $\gamma$ generated in a vehicle close to a target yaw rate $\gamma_T$, and also calculates a target vehicle body slip angle $\beta'_T$ of the vehicle and controls braking/driving forces (motor torque) to front wheels 1FL and 1FR and/or rear wheels 1RL and 1RR to bring a current vehicle body slip angle $\beta'_C$ generated in the vehicle close to the target vehicle body slip angle $\beta'_T$. Since because of this configuration, the actual yaw rate $\gamma$ of the vehicle in the non-grip area comes close to the target yaw rate $\gamma_T$, steering stability at the time of turning is improved, and at the same time, by properly setting the target vehicle body slip angle $\beta'_T$ in the non-grip area, corrective steering can be reduced.

In addition, by setting a change angle of the traveling direction of the vehicle that causes the forward gaze position calculated from the forward gaze time and traveling speed V of the vehicle to coincide with a position on the target turning trajectory of the vehicle as the target vehicle body slip angle $\beta'_T$, it is possible to correct a deviation of the forward gaze position in the non-grip area and securely bring the actual turning trajectory of the vehicle close to the target turning trajectory.

In addition, by setting a target turning trajectory, based on the reference yaw rate $\gamma_R$ matching the front wheel turning angle $\delta_F$ ($\propto$ the steering angle) and the traveling speed V, it becomes possible to travel a turning trajectory equivalent to a turning trajectory in the grip area even in the non-grip area.

In addition, by setting the forward gaze position according to the turning trajectory of the vehicle obtained from the actual yaw rate $\gamma$ generated in the vehicle and the traveling speed V, it becomes possible to reduce corrective steering toward the target turning trajectory as much as possible even when the turning trajectory of the vehicle deviates from the target turning trajectory.

In addition, by setting the target vehicle body slip angle $\beta'_T$ more inward of the turning trajectory than the current vehicle body slip angle $\beta_C$ in the grip area when the vehicle is in the understeer state and setting the target vehicle body slip angle $\beta'_T$ more outward of the turning trajectory when the vehicle is in the oversteer state, it is possible to securely bring the actual turning trajectory of the vehicle close to the target turning trajectory.

In addition, by determining that the vehicle is in the non-grip area when the difference between the reference yaw rate $\gamma_R$ matching the front wheel turning angle $\delta_F$ ($\propto$ the steering angle) and the actual yaw rate $\gamma$ generated in the vehicle is greater than or equal to a predetermined threshold value, it is possible to securely determine the non-grip area.

In addition, by controlling braking/driving forces of the front wheels and the rear wheels when a steering input is given to the vehicle from a driver and controlling the braking/driving force of only one of the front wheels and the rear wheels when the steering input is not given, advantageous effects, such as reduced power consumption and fuel consumption during straight travel, which does not require corrective steering or vehicle behavior improvement, can be achieved.

Reference Signs List

| | |
|---|---|
| 1FL, 1FR | Front wheel |
| 1RL, 1RR | Rear wheel |
| 2F | Front (front wheel) motor |

| 2R | Rear (rear wheel) motor |
|---|---|
| 5 | Accelerator opening sensor |
| 6 | Brake pressing force sensor |
| 7 | Steering angle sensor |
| 8 | Yaw rate sensor |
| 9 | Travel characteristic selection switch |
| 11 | Controller |
| 16 | Wheel speed sensor |
| 17 | Hydraulic braking device |
| 18 | Brake controller |
| 19 | Hydraulic pressure unit |

**Claims**

1. A vehicular braking/driving force control method for controlling braking/driving force of a front wheel and/or a rear wheel of a vehicle, the vehicle being provided with a yaw rate control device capable of controlling a yaw rate, the vehicular braking/driving force control method comprising:

   determining whether the vehicle is in a non-grip area where a cornering force of a tire is not proportional to operation input by a driver; and
   in the non-grip area, causing the yaw rate control device to perform control to bring a yaw rate generated in the vehicle close to a target yaw rate, calculating a target vehicle body slip angle of the vehicle, and controlling braking/driving force of the front wheel and/or the rear wheel to bring a vehicle body slip angle generated in the vehicle close to the target vehicle body slip angle.

2. The vehicular braking/driving force control method according to claim 1, wherein the target vehicle body slip angle is a change angle of a vehicle traveling direction causing a forward gaze position, the forward gaze position being calculated from forward gaze time and traveling speed of the vehicle, to coincide with a position on a target turning trajectory of the vehicle.

3. The vehicular braking/driving force control method according to claim 2, wherein the target turning trajectory is obtained from a reference yaw rate of the vehicle matching a steering angle or a turning angle and the traveling speed.

4. The vehicular braking/driving force control method according to claim 2, wherein the forward gaze position is set based on a turning trajectory of a vehicle obtained from a yaw rate generated in the vehicle and the traveling speed.

5. The vehicular braking/driving force control method according to claim 1, wherein when the vehicle is in an understeer state, the vehicular braking/driving force control method sets the target vehicle body slip angle more inward of a turning trajectory than a vehicle body slip angle of the vehicle matching a steering angle or a turning angle.

6. The vehicular braking/driving force control method according to claim 1, wherein when the vehicle is in an oversteer state, the vehicular braking/driving force control method sets the target vehicle body slip angle more outward of a turning trajectory than a vehicle body slip angle of the vehicle matching a steering angle or a turning angle.

7. The vehicular braking/driving force control method according to claim 1, wherein determination of the non-grip area determines that the vehicle is in the non-grip area when a difference between a reference yaw rate of the vehicle matching a steering angle or a turning angle and a yaw rate generated in the vehicle is greater than or equal to a predetermined threshold value.

8. The vehicular braking/driving force control method according to claim 1, wherein the vehicular braking/driving force control method controls braking/driving force of the front wheel and the rear wheel when a steering input is given to the vehicle from a driver and controls braking/driving force of only one of the front wheel and the rear wheel when the steering input is not given.

9. A vehicular braking/driving force control device configured to control braking/driving force of a front wheel and a rear wheel of a vehicle, the vehicle being provided with a yaw rate control device capable of controlling a yaw rate, the vehicular braking/driving force control device comprising:

a motor for front wheel capable of adjusting braking/driving force of the front wheel according to an operating state;

a motor for rear wheel capable of adjusting braking/driving force of the rear wheel according to an operating state; and

a controller configured to: determine whether the vehicle is in a non-grip area where the cornering force of a tire is not proportional to operation input by a driver; and in the non-grip area, cause the yaw rate control device to perform control to bring a yaw rate generated in the vehicle close to a target yaw rate, calculate a target vehicle body slip angle of the vehicle, and control operating states of the motor for front wheel and/or the motor for rear wheel to bring a vehicle body slip angle generated in the vehicle close to the target vehicle body slip angle.

# FIG. 1

# FIG. 2

# FIG. 3

START

S0

STEERING ANGLE $\theta \neq 0$?

N

S6

FRONT MOTOR TORQUE
CORRECTION VALUE=0
REAR MOTOR TORQUE
CORRECTION VALUE=0

Y

S1

READING IN AND CALCULATION
OF NECESSARY DATA

S2

GRIP AREA?

N

| REFERENCE YAW RATE |
− | ACTUAL YAW RATE |
≦ THRESHOLD VALUE
(BOTH TRAVELING SPEED AND
STEERING ANGLE ARE THRESHOLD
VALUES OR MORE)

Y

S4

OUTPUT CONTROL COMMAND
CAUSING ACTUAL YAW RATE TO
COINCIDE WITH TARGET YAW
RATE TO BRAKE CONTROLLER

S3

GRIP AREA MOTOR
TORQUE CORRECTION
VALUE CALCULATION

NON-GRIP AREA MOTOR
TORQUE CORRECTION
VALUE CALCULATION

S5

RETURN

# FIG. 4

START

READ IN STEERING ANGLE $\theta$,
WHEEL SPEED Vw, AND YAW RATE $\gamma$

S11

CALCULATE TRAVELING SPEED V

S12

CALCULATE REFERENCE YAW RATE $\gamma_R$

S13

RETURN

FIG. 5

START

CALCULATE TARGET VEHICLE BODY SLIP ANGLE $\beta_T$ — S31

CALCULATE CURRENT VEHICLE BODY SLIP ANGLE $\beta_C$ — S32

CALCULATE VEHICLE BODY SLIP ANGLE DIFFERENCE $\Delta\beta$ — S33

IS CURRENT VEHICLE BODY SLIP ANGLE $\beta_C$ FORMED OUTWARD WITH RESPECT TO TARGET VEHICLE BODY SLIP ANGLE $\beta_T$? — S34

N

Y

S35 — CALCULATE FRONT WHEEL BRAKING/DRIVING FORCE DECREASE AMOUNT AND REAR WHEEL BRAKING/DRIVING FORCE INCREASE AMOUNT MATCHING VEHICLE BODY SLIP ANGLE DIFFERENCE $\Delta\beta$

S36 — CALCULATE GRIP AREA FRONT MOTOR TORQUE (DECREASE) CORRECTION AMOUNT AND GRIP AREA REAR MOTOR TORQUE (INCREASE) CORRECTION AMOUNT

S37 — CALCULATE FRONT WHEEL BRAKING/DRIVING FORCE INCREASE AMOUNT AND REAR WHEEL BRAKING/DRIVING FORCE DECREASE AMOUNT MATCHING VEHICLE BODY SLIP ANGLE DIFFERENCE $\Delta\beta$

CALCULATE GRIP AREA FRONT MOTOR TORQUE (INCREASE) CORRECTION AMOUNT AND GRIP AREA REAR MOTOR TORQUE (DECREASE) CORRECTION AMOUNT

S38

RETURN

FIG. 6

$$\varepsilon = \sqrt{R^2 + L_G^2} - R$$

$$\beta_T = \frac{\sqrt{R^2 + L_G^2}}{L_G} - \frac{R}{L_G}$$

# FIG. 7

START

S51 — CALCULATE TARGET VEHICLE BODY SLIP ANGLE $\beta'_T$

S52 — CALCULATE CURRENT VEHICLE BODY SLIP ANGLE $\beta'_C$

S53 — CALCULATE VEHICLE BODY SLIP ANGLE DIFFERENCE $\Delta\beta'$

S54 — IS CURRENT VEHICLE BODY SLIP ANGLE $\beta'_C$ FORMED OUTWARD WITH RESPECT TO TARGET VEHICLE BODY SLIP ANGLE $\beta'_T$?

N →

Y ↓

S55 — CALCULATE FRONT WHEEL BRAKING/DRIVING FORCE DECREASE AMOUNT AND REAR WHEEL BRAKING/DRIVING FORCE INCREASE AMOUNT MATCHING VEHICLE BODY SLIP ANGLE DIFFERENCE $\Delta\beta'$

S57 — CALCULATE FRONT WHEEL BRAKING/DRIVING FORCE INCREASE AMOUNT AND REAR WHEEL BRAKING/DRIVING FORCE DECREASE AMOUNT MATCHING VEHICLE BODY SLIP ANGLE DIFFERENCE $\Delta\beta'$

S56 — CALCULATE NON-GRIP AREA FRONT MOTOR TORQUE (DECREASE) CORRECTION AMOUNT AND NON-GRIP AREA REAR MOTOR TORQUE (INCREASE) CORRECTION AMOUNT

CALCULATE NON-GRIP AREA FRONT MOTOR TORQUE (INCREASE) CORRECTION AMOUNT AND NON-GRIP AREA REAR MOTOR TORQUE (DECREASE) CORRECTION AMOUNT

S58

RETURN

# FIG. 8

$$\varepsilon' = \sqrt{R'^2 + L_G{}^2} - R$$

$$\beta'_T = \frac{\sqrt{R'^2 + L_G{}^2}}{L_G} - \frac{R}{L_G}$$

# FIG. 9

$$\varepsilon' = \sqrt{R'^2 + L_G{}^2} - R$$

$$\beta'_T = \frac{\sqrt{R'^2 + L_G{}^2}}{L_G} - \frac{R}{L_G}$$

## FIG. 10

## FIG. 11

## FIG. 12

## INTERNATIONAL SEARCH REPORT

| | International application No. |
| --- | --- |
| | **PCT/IB2023/000565** |

### A. CLASSIFICATION OF SUBJECT MATTER

*B62D 6/00*(2006.01)i
FI:  B62D6/00

According to International Patent Classification (IPC) or to both national classification and IPC

### B. FIELDS SEARCHED

Minimum documentation searched (classification system followed by classification symbols)

B62D6/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2001-233230 A (KOYO SEIKO CO., LTD.) 28 August 2001 (2001-08-28) entire text, all drawings | 1-9 |
| A | JP 2016-178758 A (FUJI HEAVY INDUSTRIES LTD.) 06 October 2016 (2016-10-06) entire text, all drawings | 1-9 |
| A | JP 2013-091380 A (TOYOTA JIDOSHA KABUSHIKI KAISHA) 16 May 2013 (2013-05-16) entire text, all drawings | 1-9 |
| A | Microfilm of the specification and drawings annexed to the request of Japanese Utility Model Application No. 081590/1985 (Laid-open No. 196825/1986) (NISSAN MOTOR CO., LTD.) 08 December 1986 (1986-12-08), entire text, all drawings | 1-9 |
| A | JP 2007-302115 A (HONDA MOTOR CO., LTD.) 22 November 2007 (2007-11-22) entire text, all drawings | 1-9 |
| A | JP 2008-074186 A (NISSAN MOTOR CO., LTD.) 03 April 2008 (2008-04-03) entire text, all drawings | 1-9 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 November 2023** | **09 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/IB2023/000565** |

### C. DOCUMENTS CONSIDERED TO BE RELEVANT

| Category* | Citation of document, with indication, where appropriate, of the relevant passages | Relevant to claim No. |
| --- | --- | --- |
| A | JP 09-058502 A (TOYOTA JIDOSHA KABUSHIKI KAISHA) 04 March 1997 (1997-03-04) entire text, all drawings | 1-9 |

Form PCT/ISA/210 (second sheet) (January 2015)

INTERNATIONAL SEARCH REPORT
Information on patent family members

International application No.

**PCT/IB2023/000565**

| Patent document cited in search report | | | Publication date (day/month/year) | Patent family member(s) | | | Publication date (day/month/year) |
|---|---|---|---|---|---|---|---|
| JP | 2001-233230 | A | 28 August 2001 | US | 6415215 | B1 | |
| | | | | entire text, all drawings | | | |
| | | | | DE | 10109580 | A1 | |
| | | | | FR | 2806365 | A1 | |
| JP | 2016-178758 | A | 06 October 2016 | (Family: none) | | | |
| JP | 2013-091380 | A | 16 May 2013 | (Family: none) | | | |
| JP | 61-196825 | U1 | 08 December 1986 | (Family: none) | | | |
| JP | 2007-302115 | A | 22 November 2007 | (Family: none) | | | |
| JP | 2008-074186 | A | 03 April 2008 | (Family: none) | | | |
| JP | 09-058502 | A | 04 March 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007302115 A